# EUROPEAN PATENT APPLICATION

(11) **EP 3 208 066 A1**
(43) Date of publication of application: **23.08.2017**
(21) Application number: 16156132.9
(22) Date of filing: 17.02.2016
(51) Int. Cl.: B29C 44/56, B29C 51/16, B29L 31/00, B29K 25/00

(54) **METHOD AND MANUFACTURING DEVICE FOR MANUFACTURING A LAMINATED OBJECT, LAMINATED OBJECTS, METHOD FOR PRODUCING PALLETS, AND PALLETS**

(71) Applicant: NGP Next Generation Pallets GmbH, 86391 Stadtbergen (DE)
(72) Inventor: Waidmann, Kuno, 9220 Velden / Göriach (AT); France, John, Runaway Bay, Queensland 4216 (AU)
(74) Representative: Isarpatent

(57) **Abstract**

The present invention relates to a method for manufacturing a laminated object (100). A foam core (1) and a skin (6) are provided and the foam core (1) and the skin (6) are arranged relative to each other. The skin (6) is heated. The skin (6) is pierced by a vacuum application device (10). Further, vacuum is applied via the vacuum application device (10) so as to withdraw a gaseous medium, in particular air, from within the foam core (1) and from a space or spaces between the foam core (1) and the skin (6), in order to draw the skin (6) towards the foam core (1). Furthermore, the invention provides a manufacturing device (210) for manufacturing a laminated object (100), laminated objects (100) comprising a foam core (1) and a skin (6), a method for producing pallets comprising a foam core and a skin, as well as pallets comprising a foam core (1) and a skin (6).

## Description

### FIELD OF THE INVENTION

The present invention relates generally to the manufacturing of laminated objects, to laminated objects comprising a foam core and a skin, as well as to pallets comprising a foam core and a skin, and to methods for producing such pallets.

### TECHNICAL BACKGROUND

Although the present invention may be useful for improving laminated objects of various shapes, uses and types, as well as corresponding manufacturing methods, the present invention and the underlying problem will be explained in the following in greater detail with regard to pallets, for example pallets such as are used for transporting various goods, e.g. by truck, train, ship, or aircraft, or other vehicles.

Pallets are used in almost every industry in which goods must be transported. Generally, known pallet types can be made from corrugated paper, lumber, engineered wood, plastic or metal.

Nowadays, wooden pallets are the most common type of pallet. However, wooden pallets have a number of disadvantages. For example, pallets made of wood are relatively heavy, and may be difficult to handle due to their weight. Moreover, for example, regulations governing wood intended for international use may require a special treatment of wood packaging materials, such as pallets, for example by heat treatment or fumigation. Such treatments are costly, may be undesirable with regard to their environmental impact, and the treatment by fumigation may hinder a reuse of the pallets. Furthermore, wooden pallets may not be suitable for certain products, usually are not recyclable, and do not contribute to climate protection.

The manufacturing of plastic pallets, however, requires a significant investment in equipment and tooling. The costs incurred for materials and production are on average higher for conventional plastic pallets than for lumber pallets.

Moreover, low performance plastic pallets can have disadvantages such as restricted strength and robustness, too much weight, and an unfavorable cost-benefit ratio.

It would be desirable to overcome at least some of the disadvantages of conventional pallets mentioned above.

### SUMMARY OF THE INVENTION

In view of this, the problem to be solved by the present invention is to provide an improved, cost-effective method for manufacturing a durable, light-weight object, which in particular can be made from synthetic materials and in particular can be used as a pallet. Further, the present invention aims at providing an improved manufacturing device, and an improved method for producing pallets. Moreover, it is an object of the present invention to provide durable, lightweight and cost-effective objects such as pallets, in particular.

According to the invention, this problem is solved by a method having the features of claim 1 and/or by a manufacturing device having the features of claim 12 and/or by a laminated object having the features of claim 14 and/or by a laminated object having the features of claim 15 and/or by a method having the features of claim 16 and/or by a pallet having the features of claim 18 and/or by a pallet having the features of claim 20 and/or by a pallet having the features of claim 22.

Accordingly, the present invention provides a method for manufacturing a laminated object, wherein the method comprises steps of:
- providing a foam core and a skin, and arranging the foam core and the skin relative to each other;
- heating the skin;
- piercing the skin by a vacuum application device; and
- applying vacuum via the vacuum application device so as to remove a gaseous medium, in particular air, from within the foam core and from a space or spaces between the foam core and the skin, in order to draw the skin towards the foam core.

In accordance with the present invention, there is also provided a manufacturing device for manufacturing a laminated object, in particular by performing such a method. The manufacturing device comprises a supporting arrangement adapted to support a foam core and hold the foam core and portions of a skin in a predefined position relative to each other. Furthermore, the manufacturing device comprises a heating arrangement for heating the skin, and a vacuum application device adapted to pierce the skin and adapted for removing a gaseous medium, in particular air, from within the foam core and from a space or spaces between the foam core and the skin via the vacuum application device.

The invention further proposes a first laminated object comprising a foam core and a skin, the first laminated object being manufactured by the method for manufacturing a laminated object according to the invention.

Further, the invention proposes a second laminated object comprising a foam core and a skin, wherein the foam core is formed from a synthetic material and the skin is formed from a synthetic material, wherein the skin is thermoformed around the foam core so as to seal the foam core within the skin such that an at least partial vacuum is preserved within a space occupied by the foam core and enclosed by the skin.

In addition, the present invention also provides a method for producing pallets comprising at least one foam core formed from a synthetic foam material and a skin formed from a synthetic sheet material. The method for producing pallets uses a production arrangement comprising at least one shape-molding device and at least one laminating device, and the method comprises steps of:
- shape-molding foam cores one after another using the shape-molding device, and subsequently laminating the sheet material to each foam core so as to provide a laminated pallet or laminated pallet section in which the foam core is covered by and connected to the skin; and
- during ongoing production of consecutive pallets or pallet sections, varying the density of the foam core and/or varying the thickness of the sheet material used to provide the skin and/or varying the composition of the sheet material, and thereby producing pallets or pallet sections differing in core density and/or in skin thickness and/or in skin composition.

A first pallet proposed by the present invention comprises a foam core formed from a synthetic foam material and a skin formed from a synthetic sheet material, wherein the skin is connected to the foam core at the surface thereof by fusion. The first pallet in particular may be manufactured using a method for manufacturing a laminated object as proposed by the invention.

A second pallet proposed by the present invention comprises a foam core formed from polystyrene foam, in particular from expanded polystyrene, and a thermoformed skin formed from a synthetic material and connected to the foam core. The second pallet in particular may be manufactured using a method for manufacturing a laminated object as proposed by the invention.

A third pallet suggested by the present invention comprises a foam core and a skin formed from a thermoformable sheet material, wherein the pallet is in particular manufactured using a method for manufacturing a laminated object as proposed by the present invention. The thermoformable sheet material comprises at least one layer comprising acrylonitrile butadiene styrene.

Within the context of this application, the term "skin" will be used for generally sheet-type, film-type, foil-type or similar materials both in their state and shape in which they are present in the final, finished product, where the material may already have been deformed and/or connected to another component, and in the initial, possibly undeformed shape and/or unconnected state.

Moreover, within the context of the present application, it should be understood that the term "vacuum" is not restricted to a vacuum in the strict sense of complete evacuation of a portion of space. Instead, within the context of this application, the term "vacuum" refers in a more general sense to a reduced, low pressure of desired degree, as compared to the ambient air pressure, including "light vacuum" as well as "strong vacuum".

An idea underlying the present invention is that a laminated object, and in particular a pallet or a section thereof, of significantly increased structural strength, durability and life span, and highly resistant to damage by impacts or rough handling, as well as of low weight, can be obtained in a competitive manner and at low cost if a heated skin, which may, for example, comprise heated skin sheets for forming the skin, is pierced and is then drawn towards the foam core by applying vacuum to an interior of the foam core. In this manner, the need for external female tools for forming the skin or skin sheets is avoided. In this manner, the costs for tooling can be reduced, and the complexity of the control of the process can be lowered. Accordingly, the laminated object obtained can be used as a competitive substitute for such wooden transport pallets, for example euro-pallets made of wood or wooden Dusseldorf-type pallets. In this way, a substitute for wooden transport pallets, having very good cost-benefit-ratio as well as having very good properties in terms of e. g. structural strength, durability, life span, rigidity and weight can be provided, the empty weight of which may, for example, correspond to only approx. 25 percent of a comparable wooden pallet.

By applying vacuum to the inside of the foam core and preserving an at least partial vacuum within the space occupied by the foam core which is enclosed by the skin, in particular by skin sheets joined to each other, a stiff, pre-stressed structure of the laminated object can be obtained. This makes such a laminated object particularly suitable for use as a transport pallet or a section thereof, not only for lightweight goods, but also for heavy duty. An very rigid construction is obtained by the simultaneous application of the skin to the foam core, the creation of an at least light vacuum inside the core, and in particular the shrinking process of the skin as the skin cools after its application to the core.

Another idea underlying the present invention is that a very versatile production process capable of producing pallets of a great variety, in particular with respect to weight and/or load-carrying capacity of the pallet, can be obtained if the foam core and the skin are each formed from a synthetic material, and the density of the foam core as well as the skin composition and/or thickness are varied "on the fly", i.e. without stopping the production arrangement, so that e.g. a range of pallets having different specification can be produced in a flexible manner using one core design and one type of shape-molding tool.

Moreover, it is an idea of the present invention that a pallet having a foam core and a skin, both the foam core and the skin each being formed from a respective synthetic material, can be significantly improved in strength, durability, life span and resistance to damage, at an adequate low weight, if the skin is connected to the foam core, at the surface of the foam core, by fusion. In particular, polystyrene foam as material for forming the core is advantageous for obtaining a lightweight pallet.

A further finding underlying the present invention is that a pallet of excellent strength and impact resistance can be obtained if the pallet is provided with a foam core and a skin and the thermoformable sheet material used to form the skin comprises at least a layer comprising acrylonitrile butadiene styrene. In particular, a food-safe pallet can also be obtained in this manner.

Advantageous improvements and developments of the invention are contained in the dependent claims as well as in the description, which refers to the figures of the drawings.

In particular, the foam core is formed from a synthetic material and/or the skin is formed from a synthetic material. Using synthetic materials, a light-weight core can be provided, which helps to reduce the overall weight of the laminated object, in particular the weight of a pallet. Moreover, the use of synthetic materials for the core and the skin contribute to obtaining a laminated object that is not only robust and durable, as well as light-weight, but also moisture-proof, safe, easy to clean and washable, temperature-resistant, as well as resistant to infestation, rusting, rotting and weathering. In particular, such a laminated object may be suitable for being cleaned using a pressure washer, steam cleaner or another standard system, without requiring costly special treatments like fumigation. This is especially useful if the laminated object is a pallet or a section of a pallet. Furthermore, laminated objects, in particular pallets, comprising a skin and core each made from a synthetic material can be easily customized. For example, customized design solutions are possible.

According to a development of the method and manufacturing device for manufacturing a laminated object, before the vacuum is applied, a portion of the vacuum application device is caused to penetrate through the skin into the foam core in the piercing step. In this manner, vacuum can be applied in an effective manner to the interior of the foam core. In a development of the manufacturing device, the vacuum application device is configured such that a portion thereof can penetrate through the skin into the foam core.

In accordance with a development of the method and manufacturing device for manufacturing a laminated object, the vacuum application device comprises a hollow needle, in particular a hypodermic needle, and may in particular be formed as such a hollow needle. In accordance with this development, the skin is pierced by the hollow needle in the piercing step of the method, the hollow needle of the manufacturing device being adapted to pierce the skin. A hollow needle, and in particular a hypodermic needle, is particularly suitable for piercing the skin and applying vacuum, as it is sharp and leaves only a small aperture in the skin after having been withdrawn.

In a development of the manufacturing device, the manufacturing device is configured such that the vacuum application device, in particular the needle, is movable with respect to the foam core when the foam core is supported by the supporting arrangement. According to an example, the needle of the vacuum application device may be mounted onto a frame or other support which is movable with respect to the supported foam core. In this way, the piercing of the skin can be relatively easily accomplished. In a development of the method for manufacturing a laminated object, the skin may be pierced by moving the vacuum application device relative to the foam core.

According to a development of the method for manufacturing a laminated object, in the step of piercing the skin, a section of the skin is pressed against the foam core by a sealing face surrounding the vacuum application device. In a development of the manufacturing device, the vacuum application device is surrounded by a sealing face adapted to press a section of the skin against the foam core. In particular, the sealing face may surround the hollow needle of the vacuum application device, in such a manner that a portion of the hollow needle including the point thereof protrudes from the sealing face. Pressing a section of the skin, in the proximity of the location where the skin is pierced, against the foam core avoids tearing of the heated skin as it is penetrated by the sharp vacuum application device.

In a development of the method for manufacturing a laminated object, an aperture or apertures which is/are created in the skin during the piercing step is or are sealed after withdrawing the vacuum application device or the vacuum application devices, in particular after withdrawing the needle or needles from the foam core. In this development, the sealing step is performed in particular in such a manner that a vacuum is permanently preserved within the foam core of the finished laminated object. This may contribute to obtaining a pre-stressed structure of the laminated object, making the laminated object very rigid. Moreover, preserving a vacuum, for example a light vacuum, inside the foam core improves the insulation properties of the foam core even further. Such a laminated object may, in accordance with an example, be particularly suitable for use as a transport pallet for cool room applications or a pallet section of such a pallet. In this way, the pallet may then require much less energy to cool to a cool room temperature than a wooden pallet. The manufacturing device may, in an example, be adapted to perform sealing of the aperture or apertures. In particular, in accordance with this development, the production arrangement used for producing pallets may be adapted to perform such sealing of the aperture or apertures. In developments of the pallets and of the laminated objects of the invention, the aperture(s) may be sealed.

According to a further development of the method for manufacturing a laminated object, the method includes thermoforming the skin by conforming the heated skin at least in regions to the foam core, using the vacuum that is applied via the vacuum application device. In this way, the skin is formed to the desired shape in a relatively simple manner without requiring expensive or complex exterior female tools. In accordance with the corresponding development of the manufacturing device, the device is adapted to perform thermoforming of the skin. In the pallets and laminated objects of the present invention, the skin in particular is thermoformed.

In accordance with a further development of the method for manufacturing a laminated object, the heated skin is drawn onto the foam core so as to contact the surface of the foam core in the step of applying the vacuum. Further, in this development, the skin is connected to the foam core by fusion, in particular by fusion of the foam core in the region of the surface of the foam core. In particular, the connection of the skin to the foam core by fusion is accomplished using the residual heat in the heated skin or heated skin portion or heated skin sheet, i.e. using the heat that is retained in the skin or skin portion or skin sheet after the heating step. A strong and durable laminated object, having low weight, may in this way be obtained in a relatively simple manner.

According to a further development of the method for manufacturing a laminated object, the step of providing the skin comprises providing at least two skin sheets. Further, in this development, the arranging step comprises arranging the foam core between the skin sheets, and the step of piercing the skin comprises piercing at least one of the skin sheets by the vacuum application device. In particular, the skin sheets may be a top sheet and a bottom sheet positioned on the top side and on the bottom side of the foam core, respectively. In this way, both sides of the foam core can be laminated simultaneously in the same process. Such a process can also be called a twin sheet process. In this manner, the foam core can be completely sealed within the skin, whereby a resistant, durable structure can be obtained. Further, for example, in the interior of this structure, a light vacuum can be preserved.

In accordance with a development of the method for manufacturing a laminated object, the skin sheets are fusion-welded to each other in a peripheral region of the foam core so as to tightly enclose the foam core. In particular, the fusion welding of the sheets to each other is accomplished using the vacuum applied via the vacuum application device. In this manner, it becomes possible to fully seal the foam core within the skin formed by the skin sheets, in a comparatively simple manner and without a need for complicated tools.

In particular, in a development of the method for manufacturing a laminated object, the heating step is carried out before performing the steps of piercing the skin and of applying the vacuum.

In accordance with a further development of the method for manufacturing a laminated object, the foam core and the skin are arranged and the skin is heated in such a manner that, before performing the step of piercing the skin, a portion of the skin just touches a region of the foam core in which the skin is to be pierced in the piercing step. In this way, it can for example be avoided to excessively stretch the skin in the piercing step. In a further development, the manufacturing device is adapted accordingly.

In a development of the manufacturing device for manufacturing a laminated object, the supporting arrangement comprises at least one retractable support pin for supporting the foam core. In a corresponding development of the method for manufacturing a laminated object, the foam core is supported using at least one retractable support pin. In this way, the foam core can be supported, in particular between two skin sheets, for laminating the core while avoiding as far as possible to interfere with the process of drawing the skin towards the foam core.

In a preferred development of the manufacturing device, the support pin is movably mounted in a bar element. The bar element and the support pin are arranged in such a manner that, during application of the vacuum, portions of the skin sheets can be drawn against the bar element from opposite sites thereof, and the support pin can be retracted from the core when portions of the skin sheets have reached the bar element. In accordance with a development of the method for manufacturing a laminated object, the support pin being movably mounted in the bar element, the skin sheets are drawn towards the bar element during application of the vacuum, and the support pin is retracted away from the foam core after the skin sheets have reached the bar element.

In a further development of the method for manufacturing a laminated object, the application of vacuum via the vacuum application device is continued until the sheets have been drawn towards each other in a peripheral region of the foam core and have been welded so as to connect the sheets to one another in this region. In this manner, the support pins interfere as little as possible with the connection of the skin sheets in the peripheral region of the foam core, and a clean and faultless weld is established.

In accordance with a development of the manufacturing device, the supporting arrangement is constructed such that the portions of the skin and portions of the supporting arrangement in cooperation can temporarily form an enclosure around the foam core, wherein the enclosure is sealed with the exception of at least one vent provided in the supporting arrangement. In this development, the at least one vent is configured to allow outflow of a gaseous medium, in particular air, from the interior of the enclosure. In this manner, the gaseous medium, in particular air, can be naturally exhausted from the space between the skin portions or sheets while the skin is heated. In the development of the method for manufacturing a laminated body, a gaseous medium, in particular air, is enabled to be exhausted from the interior of an enclosure formed around the foam core by portions of the skin and portions of a supporting arrangement for supporting the foam core, in particular during the step of heating the skin, more preferably during the steps of heating and of applying the vacuum via the vacuum application device. With this development, a pressure buildup due to heating the skin between portions or sheets of the skin can be avoided, and the vent can contribute to exhausting air within the enclosure in order to be able to rapidly draw the skin towards the foam core. Rapidly drawing the skin towards the foam core, in turn, in particular may contribute to establishing an efficient connection of the skin and the foam core by fusion, as there is in this case little loss of retained heat.

In particular, in a development, the vent remains open during the step of applying the vacuum.

In a further development of the method for manufacturing a laminated object, the step of applying vacuum via the vacuum application device is followed by a cooling step. In a corresponding development of the manufacturing device, the manufacturing device further comprises a cooling device, the cooling device in particular comprising at least one fan which can be controlled with respect to flow rate and/or rotational speed and/or time of operation.

In a further development of the method for manufacturing a laminated object, the skin, in particular the skin sheets, is or are caused to shrink during the step of cooling. This contributes to obtaining a laminated object which forms a pre-stressed structure, which can advantageously be used as a pallet or pallet section of high structural strength, improved durability and life span, high rigidity and low weight.

In accordance with a development of the method for manufacturing a laminated object, the laminated object is a pallet or a pallet section, in particular a twin sheet pallet or a twin sheet pallet section. In accordance with a development of the manufacturing device, the manufacturing device is adapted for manufacturing a pallet or a pallet section as a laminated object, in particular a twin sheet pallet or a twin sheet pallet section.

In accordance with developments of the laminated objects of the present invention, the laminated object is a pallet or a pallet section. In accordance with a further development, each of the laminated objects of the present invention may be a twin sheet laminated object, in particular a twin sheet pallet or a twin sheet pallet section.

In a preferred development of the method for manufacturing a laminated object, the foam core comprises legs protruding from one side of the foam core, wherein in accordance with this development, the skin is pierced in the piercing step by the vacuum application device in the region of one or more of the legs. In this way, the laminated object can in particular form a pallet section of a double-sided pallet which is formed from two pallet sections. Accomplishing the piercing by piercing the skin in the region of the legs allows to seal an aperture or apertures created by the vacuum application device or vacuum application devices in the piercing step by connecting respective legs or feet of two pallet sections to each other.

According to a development of the present invention, the foam core is formed with a polystyrene foam, the foam core preferably being formed with expanded polystyrene (which may also be designated as EPS). The use of polystyrene foam, in particular expanded polystyrene (or EPS), for the foam core makes it possible to provide an especially lightweight laminated object, which is particularly advantageous for producing lightweight transport pallets. Additionally, the use of polystyrene foam for the foam core is further advantageous if the laminated object is a pallet or a pallet section, as the use of polystyrene foam contributes to the pallet being food safe, avoiding contamination of foodstuffs. Also, such a foam core contributes to advantageous insulating properties of the laminated object. This can be useful if the laminated object is a pallet for transporting temperature-sensitive goods, or a pallet section thereof. In addition, the use of a polystyrene foam core contributes to a good recyclability of the laminated object.

In accordance with a further development of the invention, the foam core is shape-molded from pre-expanded beads. In accordance with this development, the fusion level of the beads obtained during the shape-molding is smaller than 100 percent. Preferably, the fusion level is between approximately 70 percent and approximately 90 percent, more preferably between approximately 75 percent and approximately 85 percent. Even more preferably, the fusion level of the beads corresponds to substantially 80 percent.

The fusion level obtained can be established by breaking a sample of foam used for the foam core and inspecting the surface of the break through the material. A fusion level of 100 percent would be present if all beads along the break had broken through themselves, with the rupture line running through the beads. A lower fusion level will be present if at least a portion of the beads separate from each other along their surfaces, while these beats themselves remain intact along the break. A fusion level of between 70 percent and 90 percent, preferably between 75 percent and 85 percent, more preferably 80 percent, has the advantage that air can flow to a certain extent through the foam core. The fusion thus influences the air permeability of the foam core. Selecting the fusion level in such a manner that airflow is possible to a desired extent through the foam core makes it possible to relatively quickly draw the skin towards the foam core, whereby excessive cooling of the heated skin before contact with the foam core can be avoided and an appropriate fusion between the skin and the core for connecting both can be ensured.

In accordance with a further development of the invention, the expanded polystyrene used for forming the foam core preferably is a very low pentane grade of expanded polystyrene, which, in particular, does not require ageing. If the need for ageing of the EPS beads is avoided, significant savings in storage costs can be obtained, and the manufacturing cycle time can be reduced. However, the invention is not restricted to the use of such a very low pentane grade of expanded polystyrene.

In developments of the invention, the density of the foam core may be varied according to the strength and/or load-carrying capacity of the laminated object to be obtained. For example, an expanded polystyrene foam core of high density may be chosen, in particular for pallets for repeated use and/or for heavy duty.

Preferably, the foam core is shape-molded to a desired core shape.

In accordance with a development of the invention, the skin, in particular the skin sheets, is or are formed with a thermoformable synthetic material, in particular a thermoplastic synthetic material. This contributes to obtaining a lightweight, hygienic, moisture-proof, safe, washable and versatile laminated object, in particular pallet or pallet section. Such a skin also avoids rusting or rotting of the laminated object.

In accordance with a further development of the methods, the manufacturing device, the laminated objects and the first and second pallets of the invention, the skin comprises at least one layer which comprises acrylonitrile butadiene styrene. Such a layer contributes to increased strength and increased impact resistance of the laminated body, in particular the pallet or pallet section, improving the resistance and durability of the laminated object.

In accordance with a further development of the present invention, the skin, and in particular a thermoformable sheet material from which the skin is formed, comprises at least one layer which comprises acrylonitrile styrene acrylate. Such a layer provides the skin with strength, impact resistance and UV stability, and therefore also contributes to the resistance, strength and durability of a pallet or pallet section formed by the laminated object.

In accordance with a preferred development, the skin, and in particular a thermoformable sheet material from which the skin is formed, comprises a layered arrangement of several layers. The skin may be made from such a thermoformable sheet material, produced, for example, by multiple layer extrusion.

In particular, in accordance with a development of the invention, the layered arrangement includes a first layer comprising acrylonitrile styrene acrylate, a second layer comprising acrylonitrile butadiene styrene and a third layer comprising acrylonitrile styrene acrylate and acrylonitrile butadiene styrene. In this arrangement, in a preferred variant, the first layer may be an outside layer, the second layer may be a middle layer, and the third layer may be an inside layer. In accordance with a development, therefore, the second layer is arranged between the first and third layers and the third layer faces the foam core. In this case, a high performance skin is obtained. The first skin provides strength, impact resistance and UV stability. The second layer provides increased strength and increased impact resistance. The third layer provides adequate capability of connecting to the foam core, in particular to a foam core made from polystyrene foam, such as expanded polystyrene. Such a skin is also food-safe.

In accordance with a preferred development of the invention, the first layer is made of virgin acrylonitrile styrene acrylate (which may also be designated as virgin ASA), the second layer is made of virgin acrylonitrile butadiene styrene (which may also be designated as virgin ABS), and the third layer is made of a combination of acrylonitrile styrene acrylate and acrylonitrile butadiene styrene. Preferably, approximately 10 % of the third layer by mass are formed from acrylonitrile butadiene styrene, while the rest of the third layer is formed from acrylonitrile styrene acrylate.

In this way, a high performance skin is obtained which contributes to obtaining a strong, moisture-proof, impact-resistant, hygienic, safe, shock-absorbent, temperature-resistant and UV-proof laminated object which can be easily cleaned, is immune to infestation, does not need costly heat treatment or fumigation, resists rusting, rotting and weathering. Such a skin also contributes to a good recyclability of the laminated object. This is particularly advantageous if the laminated object is a pallet or a pallet section.

In an improvement of the present invention, an RFID transponder (radio frequency identification transponder) may be integrated into the laminated object, in particular into the pallet or pallet section. This makes it possible to easily track the laminated object, in particular the pallet or pallet section, using radio frequency identification technology. RFID technology known as such to the skilled person may be employed for this purpose.

In an improvement of the invention, the RFID transponder may be integrated into the foam core. This may be done, for example, during shape-molding of the foam core. The RFID transponder may be located at any suitable location within the foam core.

In accordance with a development of the method for producing pallets, the laminating step of the method is carried out by performing the method for manufacturing a laminated object of the present invention, wherein the laminated object is the laminated pallet or laminated pallet section. The developments and improvements set forth herein may accordingly apply to the method for producing pallets.

In accordance with a further development, the method for producing pallets includes a step of welding two pallet sections, each comprising a foam core enclosed by a skin, to each other in order to form a pallet. In such a manner, a particularly resistant, strong and durable pallet can be obtained.

According to a further development of the invention, each of the pallet sections comprises legs extending from one side of the pallet section, wherein the welding of the pallet sections to each other takes place in the region of the legs.

According to a development, the method for producing pallets is used to produce single-sided pallets or double-sided pallets. The pallets of the present invention may be single-sided or double-sided, wherein double-sided pallets comprise at least two sections welded to each other. In particular, each of the sections may be formed as a twin sheet laminated pallet section.

The pallets of the present invention may advantageously be equipped as a finished display for retail, for example by selecting an appropriate design, in particular by the choice of the color or printing of the skin, by labeling using printing or relief, and so on. Such a pallet is very versatile and can advantageously be used by the retailer as it is, without need for covering or concealing the pallet for aesthetic reasons.

The pallets of the present invention may, in examplary developments of the invention, have a carrying capacity of between approximately 30 kg and approximately 3000 kg. Moreover, in examples, the weight of an empty pallet according to the invention may be between approximately 3 kg and approximately 15 kg.

The size of the pallet of the present invention in its principal plane of extension may, for example, be selected such that the pallet is up to approximately 1200 mm in length and up to approximately 1200 mm in width.

However, it should be understood that the pallets of the present invention are not limited to these ranges of carrying capacity, weight and/or size, and that other values depending on the particular application may be chosen as desired.

The pallets of the present invention may advantageously be used as transport pallets, for example for transporting various types of goods. Examples of goods that might be transported using the pallets of the present invention include foodstuffs, beverages, airfreight, products in the automobile industry, products involving strict hygienic requirements, pharmaceutical products, or electronic products. However, the pallets of the present invention are not restricted to be used for transporting goods of the afore-mentioned types, and their use in transport of various other goods is contemplated. The pallets could be pool-type pallets, for example.

The developments and improvements described above can each be applied to the method for manufacturing a laminated object, to the manufacturing device, as well as to the laminated objects, to the pallets and to the method for producing pallets according to the present invention.

The developments, improvements and enhancements described above may be arbitrarily combined with each other whenever this makes sense. Moreover, other possible developments, enhancements and implementations of the invention comprise combinations or features of the invention which have been described above or will be described in the following in relation to the detailed description of the embodiments, even where such a combination has not been expressly mentioned.

### BRIEF DESCRIPTION OF THE DRAWINGS

The invention will be explained in the following with reference to the schematic figures of the drawings, which illustrate embodiments of the invention, wherein:
- Figure 1: displays in schematic manner a foam core, skin sheets as well as components of a manufacturing device, for manufacturing a laminated object, in accordance with an embodiment of the present invention, in a first state;
- Figure 2: shows details of the foam core as well as of components of the manufacturing device in accordance with the embodiment of Figure 1;
- Figure 3: shows details of the foam core and components of the manufacturing device and of the skin sheets in accordance with the embodiment of Figure 1, in the state of Figure 1;
- Figure 4: shows the details of the foam core, skin sheets and components of Figure 3, but in a second state during a manufacturing process;
- Figure 5: shows the details of the foam core, the skin sheets and the components of Figure 3 in a further, third state during the manufacturing process;
- Figure 6: shows the details of the foam core, the skin sheets and the components of Figure 3 in a still further, fourth state during the manufacturing process in which an upper skin sheet has been pierced and vacuum is being applied;
- Figure 7: shows the details of the foam core, the skin sheets and the components of Figure 3 in a still further, fifth state during the manufacturing process, in which application of vacuum is continued and the skin sheets have partially been drawn against a bar element supporting a support pin;
- Figure 8: shows the details of the foam core, the skin sheets and the components of Figure 3 in a still further, sixth state during the manufacturing process, in which the support pin has been retracted and the skin sheets have been welded to each other;
- Figure 8A: shows a portion of a laminated object obtained by performing the process of Figs. 1-8, after trimming;
- Figures 9 and 10: schematically illustrate the manner according to which a fusion level of beads used to mold a foam core may be determined;
- Figure 11: schematically illustrates various fusion levels in exemplary manner;
- Figure 12: illustrates a single-side pallet of a first type, in accordance with an embodiment of the invention;
- Figure 13: illustrates a single-sided pallet of a second type in accordance with a further embodiment of the invention;
- Figure 14: illustrates a double-sided pallet of a further type, in accordance with a still further embodiment of the invention;

- Figure 15: illustrates another type of double-sided pallet in accordance with a still further embodiment of the invention;
- Figure 16: displays, in sectional view, a layered arrangement of a thermoformable sheet material which is used for the skin in accordance with an embodiment of the present invention;
- Figure 17: illustrates a production line for producing pallets, according to an embodiment;
- Figure 18: illustrates the production line of Figure 17 in plan view;
- Figure 19: schematically illustrates steps of a method for manufacturing a laminated object;
- Figure 20: schematically illustrates steps of a method for producing pallets;
- Figure 21: schematically illustrates a laminating device for use in embodiments of the invention;
- Figure 22: illustrates a welding station for the production line of Figure 17, during heating of pallet sections for welding them; and
- Figure 23: illustrates the welding station of Figure 22 in a subsequent step, during which the pallet sections are pressed onto each other for connecting them by welding.

The enclosed drawings are intended to illustrate embodiments of the invention, so that the invention may be further understood. The drawings, in conjunction with the description, are intended to explain concepts and principles of the invention. Other embodiments and many of the advantages described may be inferred from the drawings. Elements of the drawings are not necessarily drawn to scale.

Elements, features and components which are identical or which have the same function or effect have been labeled in the drawings using the same reference signs, except where explicitly stated otherwise.

### DETAILED DESCRIPTION OF EMBODIMENTS

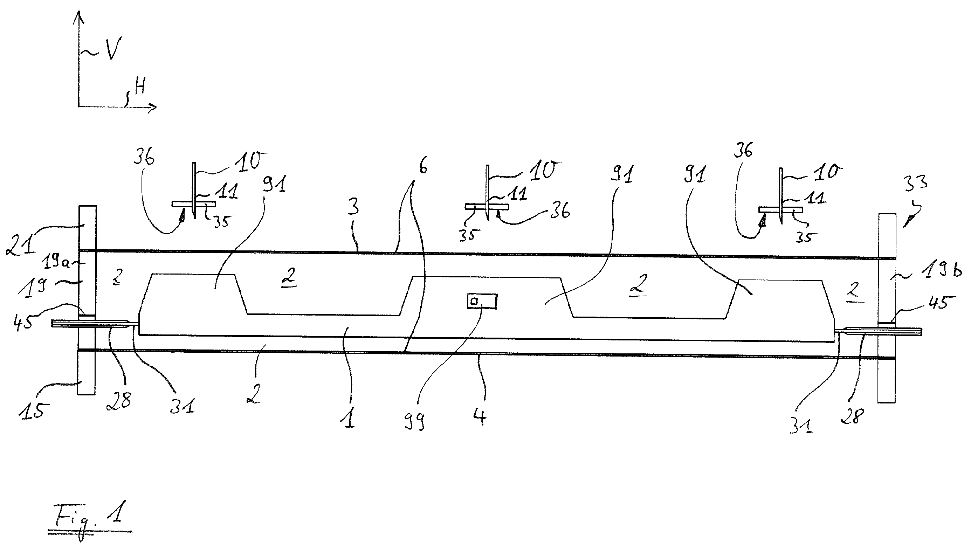

Figures 1-8A and 19 illustrate a method for manufacturing a laminated object in accordance with an embodiment of the invention. Figure 1 shows a sectional view taken through a foam core 1, an upper or top skin sheet 3, a lower or bottom skin sheet 4, vacuum application devices 10, as well as a bottom clamp frame 15, a mid frame 19, and a top clamp frame 21. Figure 1 also shows, in sectional view, bar elements 28, retractable support pins 31, sealing faces 36 surrounding each of the vacuum application devices 10, and vents 45.

Further, in Figure 1, reference sign 2 is used to denote spaces between the foam core 1, the skin sheets 3 and 4 and the mid frame 19. In accordance with the embodiment displayed in Figure 1, the foam core 1 is shaped in such a manner that it comprises protrusions or legs 91 extending from one side of the foam core 1, in the case of Figure 1 from the upper side of the foam core 1.

The method illustrated in Figures 1-8A and 19 is a method for manufacturing a laminated object, wherein the laminated object is a twin sheet pallet or a twin sheet pallet section. The materials used to form the foam core 1 and the skin sheets 3 and 4 are synthetic materials, as will be described in more detail below. The pallet or pallet section to be manufactured may accordingly be referred to as a composite plastic pallet or composite plastic pallet section, respectively.

Referring to Figure 1, the elements and components of the manufacturing device used to manufacture the laminated object will be described in more detail.

The vacuum application device 10 is configured such that it is adapted to pierce the upper skin sheet 3 during manufacturing the laminated object. In the embodiment of Figures 1-8A, the vacuum application device 10 comprises a hollow hypodermic needle, in particular a large hypodermic needle, designated in the Figures by reference numeral 11. The needle 11 can also be referred to as a vacuum needle.

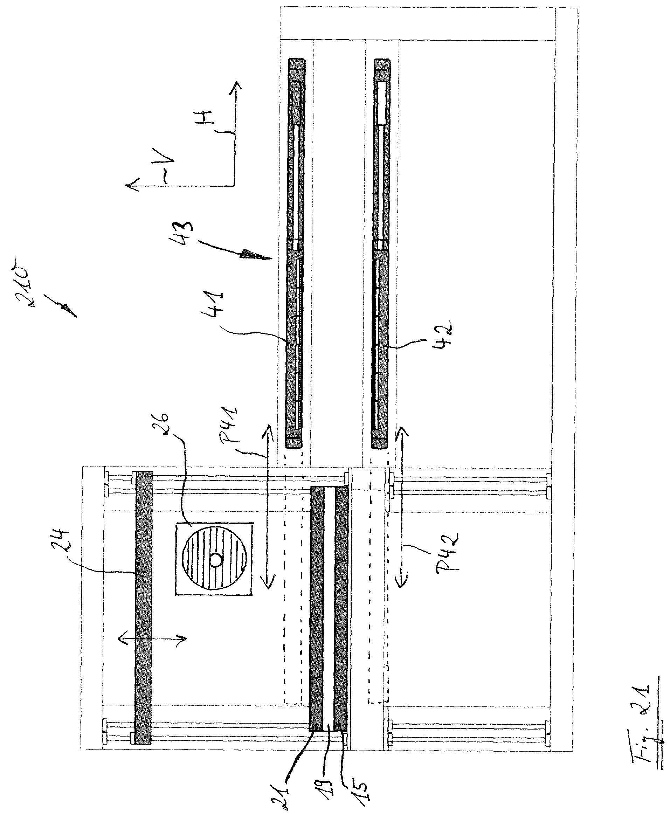

A manufacturing device in accordance with Figures 1-8A comprises a plurality of hypodermic needles 11, which are mounted on a top vertically moving frame, i.e. a frame movable along the vertical direction V in Figure 1. The top vertically moving frame is not displayed in Figures 1-8A for the sake of greater clarity, but is schematically shown in Figure 21, where it is designated by reference sign 24. The sharp points of the vacuum needles 11 face the upper skin sheet 3 in order to perform the piercing operation, as will be described.

Each of the needles 11 is surrounded by a needle surrounding component 35 which comprises the flat sealing face 36 on the side thereof facing the upper skin sheet 3. A portion of the needle 11 protrudes from the sealing face 36, and the needle 11 extends through the needle surrounding component 35. On the ends distant from the needle point and the skin sheet 3, each of the needles 11 of the vacuum application device 10 is connected to a vacuum source or low pressure source using suitable devices known as such to the person having skill in the art, which may include, but are not limited to suitable tubing, piping, control devices like valves and so on, which are not displayed in Figures 1-8A.

The sealing face 36 surrounding the vacuum application device 10, and in particular the needle 11 thereof, supports the needle 11. The sealing face 36 is adapted to trap and press the skin sheet 3 in a heated state against the foam core 1 in order to ensure that the upper skin sheet 3 does not tear when pierced.

Further referring to Figure 1, the bottom clamp frame 15, the mid frame 19 and the top clamp frame 21 are provided for clamping the lower skin sheet 4 and the upper skin sheet 3 in the desired relative positions thereof with respect to each other and with respect to the foam core 1. In particular, the top clamp frame 21 of Figure 1 is a vertically moving frame, movable along the vertical direction V, which is adapted to provide the force for keeping the upper and lower skin sheets 3 and 4 locked in place during the manufacturing cycle. The mid frame 19 separates the upper and lower skin sheets 3 and 4, respectively, in order to provide an area sufficient to accommodate and locate the foam core 1. Figure 1 shows that the mid frame 19 carries the bar elements 28 in such a manner that the bar elements 28 are movable along the horizontal direction H, perpendicular to direction V. The bar elements 28 may for example be blade-shaped.

Within each of the bar elements 28, support pins 31 are mounted so as to be slidably movable along the horizontal direction H as well, between an outer open position and an inner closed position. In Figure 1, the support pins 31 are shown in their closed position, where they grip the foam core 1 in order to support the foam core 1 and hold the foam core 1 in a predefined position relative to the skin sheets 3 and 4.

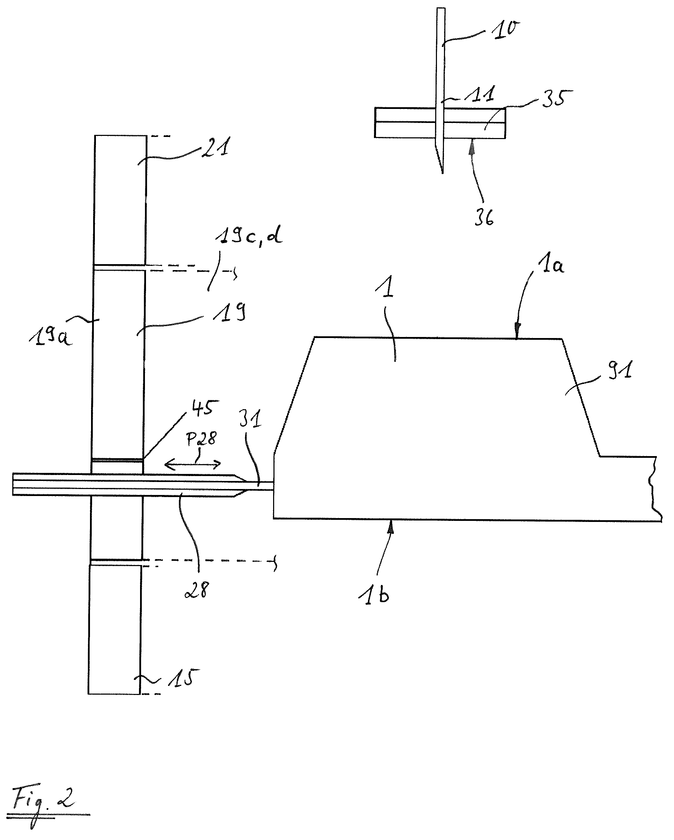

In Figure 1, two sections of the mid frame, on the left and on the right of the foam core 1 displayed in Figure 1, are shown in cross-sectional view. The other two sections 19c, 19d, only schematically indicated in Figure 2, extend substantially perpendicularly to the sections 19a and 19b of the mid frame 19, so as to form a rectangle-shaped mid frame 19, when viewed in plan view. The sections 19a-19b of the mid frame 19 are adapted to move inwards and outwards along the horizontal direction H in order to facilitate the removal of finished laminated objects. The sections 19c-19d may be movable horizontally, substantially perpendicular to direction H. For the same purpose, the mid frame 19 is also adapted and configured to perform movement along the vertical direction V.

The bottom clamp frame 15, the mid frame 19 and the top clamp frame 21 as well as the bar elements 28 with the support pins 31 in cooperation form a supporting arrangement 33 adapted to support the foam core 1 and hold it as well as portions of a skin 6, formed in the embodiment of Figures 1-8A by the upper and lower skin sheets 3 and 4, in a predefined position relative to each other. However, the bar element 28 also forms a barrier between the upper skin sheet 3 and the lower skin sheet 4, and helps to direct the sheets 3 and 4 into their correct weld position. The movement of the bar elements 28 along the horizontal direction H, inwards and outwards, illustrated by arrow P28 in Fig. 2, facilitates removal of the finished laminated object.

In the embodiment of Figures 1-8A, the vents 45 allow for the natural exhausting of air from between the upper skin sheet 3 and the lower skin sheet 4 when heating of the sheets 3 and 4 is performed. In the embodiment of Figures 1-8A, the vent 45 is kept open during the entire manufacturing cycle.

Referring now to Figure 2, this figure shows components of the supporting arrangement 33, as well as a vacuum application device 10, one of the vents 45, and a portion of the foam core 1, in greater detail. It may be appreciated that the vent 45 is located in close proximity to the bar element 28. Also shown in Figure 2 are a first face 1 a and a second face 1 b of the foam core 1, wherein the first face 1 a is directed towards the vacuum application device 10 and thus towards the upper skin sheet 3, not shown in Figure 2, whereas the second face 1 b is arranged on a side opposite to the first face 1 a, and is oriented towards the lower skin sheet 4, equally not shown in Figure 2.

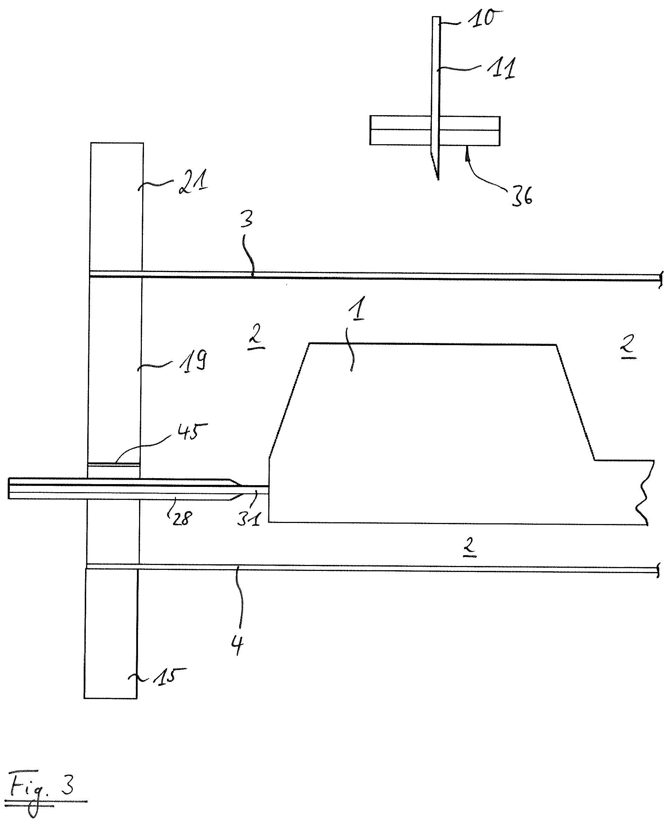

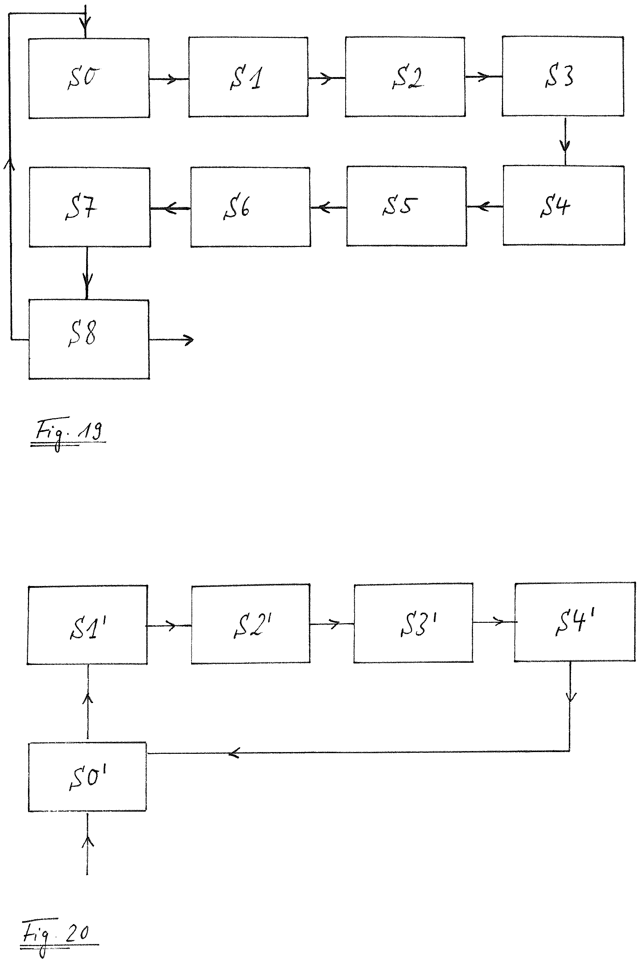

The method for manufacturing a laminated object, in particular a pallet or pallet section, will now be described with the aid of Figures 3-8. A schematic diagram illustrating the method according to the embodiment is provided in Figure 19.

At the start of the cycle - this state not being shown in the figures -, the top vertically moving frame 24 carrying the vacuum application devices 10 with the needles 11 - which may also be called a piercing frame - is in its uppermost vertical position. Also, the top clamp frame 21 is located in its uppermost vertical position. The mid frame sections 19a-19d are located in an open position, moved horizontally outward with respect to their position shown in Figure 1, and moved vertically upward, i.e. raised with respect to the position shown in Figure 1.

With respect to the configuration shown in Figure 1, the support pins 31 are, at the start of the cycle, retracted into their open position, i.e. retracted backward into the bar elements 28. Further, with respect to the configuration of Figure 1, the bar elements 28 are each retracted as well into an outward, open position. Suitable top and bottom heating devices 41, 42 may already be activated at the start of the cycle, but are in a retracted position, see Fig. 21, so as not to act upon the area defined by the frames 15, 19, 21 in this step. The movable heating devices 41 and 42 form part of a heating arrangement 43.

A portion of a suitable synthetic thermoformable sheet material, forming a lower skin sheet 4, is picked up from a suitable preparation or storage space by a sheet loading device, not shown in Figures 1-8A, transported and then laid down or dropped onto the bottom clamp frame 15. The sheet loading device may then move out from between the frames and pick up another sheet.

Then, the mid clamp frame 19 moves into its closed position, i.e. the mid clamp frame sections 19a-d move into their closed positions, in order to lock the bottom skin sheet 4 in place. The bottom sheet 4 is thus clamped between the bottom clamp frame 15 and mid frame 19.

Then, the bar elements 28 move inward along the horizontal direction H into their closed position, a core loading device, not shown in the figures, transports a pre-positioned foam core 1 into the pickup area of the mid frame 19, and then, the support pins 31 move forward, in other words, inward along the horizontal direction H, and grip the foam core 1 in order to support it. The core loading device, not shown, may then move out of the area of the frames 15, 19, 21 in order to collect another foam core 1 for the next manufacturing cycle.

Then, the sheet loading device, already referred to, lays down a second portion of a synthetic thermoformable sheet material, which forms the upper skin sheet 3, onto the top face of the mid clamp frame 19.

Subsequently, the top clamp frame 21 moves downwards and clamps the upper skin sheet 3 against the mid frame 19, whereby the whole assembly of frames 15, 19 and skin sheets 3, 4 is clamped.

This is the state of the skin sheets 3 and 4, of the foam core 1 arranged between the skin sheets 3 and 4, and of the supporting arrangement 33 of the manufacturing device, displayed in Figs. 1 and 3.

In this initial state, the foam core 1 and the skin 6, comprising the skin sheets 3 and 4, are arranged relative to each other. In Figure 19, providing the foam core 1 and the skin sheets 3 and 4 and arranging them relative to each other as well as clamping and supporting them, as described above, are summarized in a preparation step S0.

Now, in a next method step, the skin 6, i.e. the upper skin sheet 3 and the lower skin sheet 4, is heated. For this purpose, the heating devices 41 and 42, which had been in retracted position up to this moment, move over the upper skin sheet 3 and below the lower skin sheet 4, and start to heat the skin sheets 3 and 4. See the dotted lines in Fig. 21 as well as the arrows P41 and P42, which illustrate the working position of the heating devices 41, 42 in this step, as well as their movement.

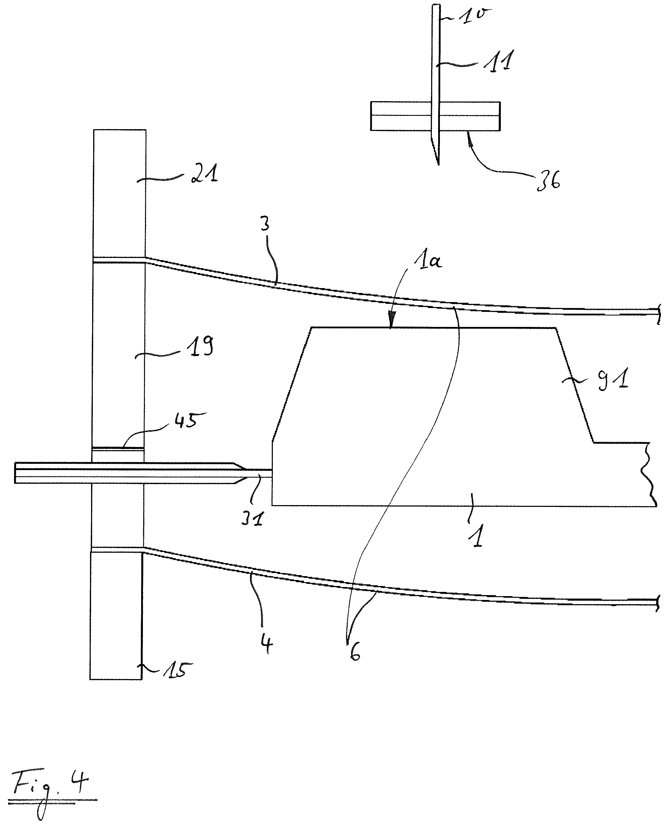

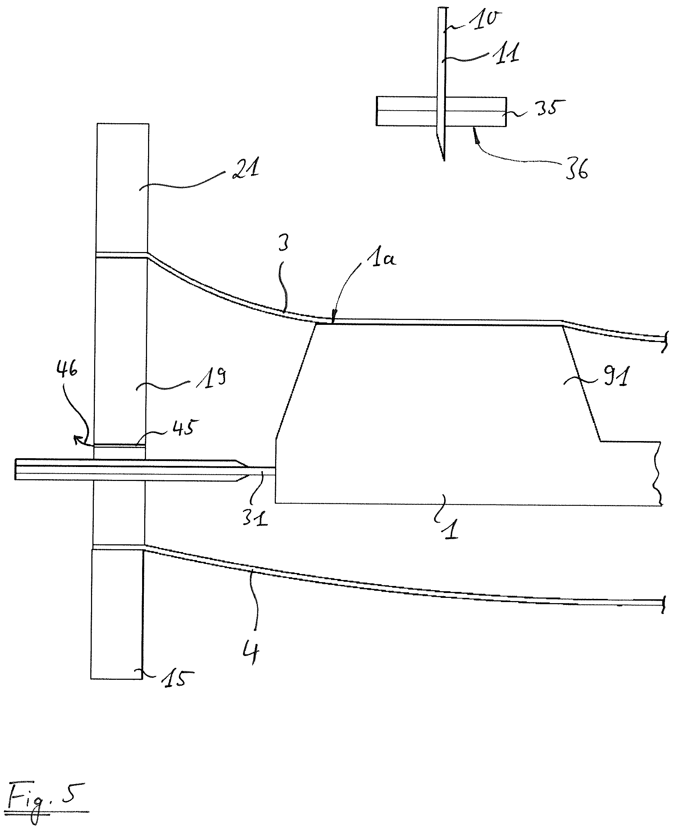

Due to the heating, the skin sheets 3 and 4 each soften and sag to some degree, see Figure 4. When the skin sheets 3 and 4 have reached their target temperature, the top skin sheet 3 preferably should just be touching the upward-oriented faces 1 a of each of the legs 91 of the foam core 1. This state is displayed in Fig. 5. The heating step is denoted, in Figure 19, by S1.

In a further step, the top vertically moving frame 24 (see Fig. 21) carrying the vacuum application devices 10 is moved downward. By using a top vertically moving frame 24, the vacuum application device 10 with the needles 11 and the sealing faces 36 is movable with respect to the foam core 1 as it is held and supported by the supporting arrangement 33, namely gripped by the support pins 31.

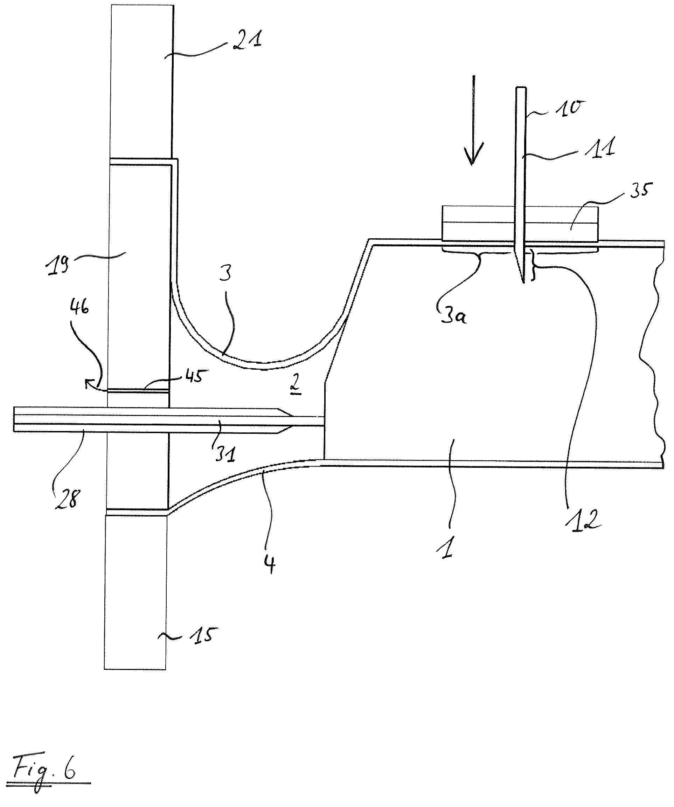

By the downward movement of the frame 24, the sealing faces 36 are firmly pressed down onto the sheet 3 which touches the first face 1 a of the foam core 1, and during this operation, the front portion 12 including the needle point of each needle 11 is embedded in the foam core 1. This means that the portion 12 of the needle 11 of each vacuum application device 10 is caused to pierce the skin 6, namely the upper skin sheet 3, and is caused to penetrate through the skin 6 into the foam core 1. The piercing step is denoted by S2 in Figure 19. Figure 6 shows how a section 3a of the skin 6, in the case of this embodiment of the upper skin sheet 3, is pressed against the foam core 1 by the sealing face 36 surrounding the vacuum application device 10. In the region of each leg 91 of the foam core 1, the skin sheet 3 is thus pierced by one of the needles 11. The section 3a already touches the first face 1 a of the foam core 1 before this section 3a of skin sheet 3 is pierced.

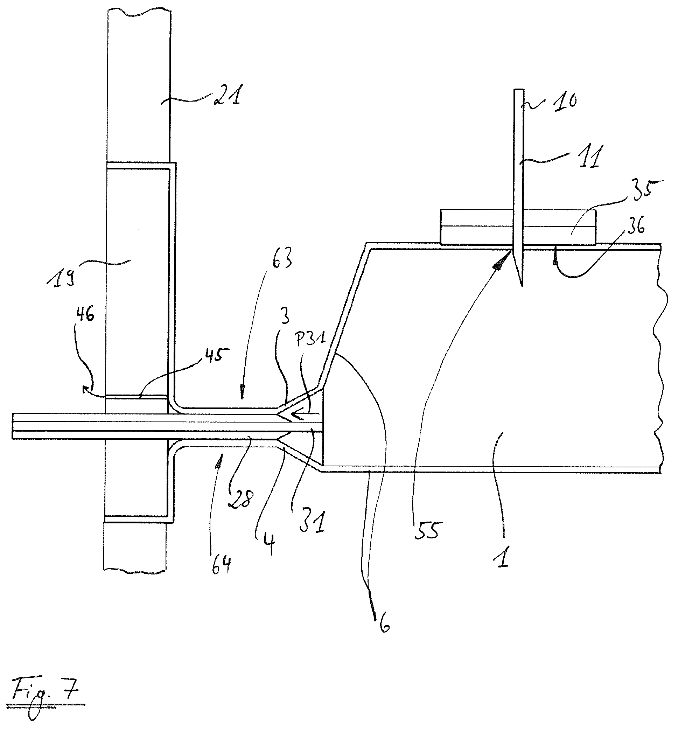

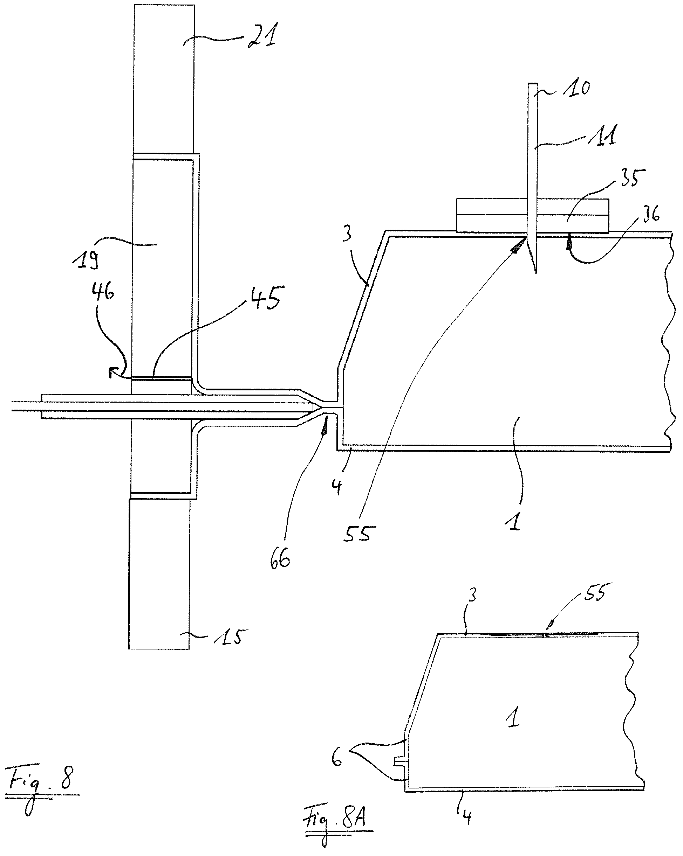

In the piercing step S2, the needles 11 create, due to their sharpness, only small apertures 55 or holes in the upper skin sheet 3, see Figures 7 and 8.

Once the needles 11 are embedded into the foam core 1, the method for manufacturing a laminated object proceeds to step S3, see Figure 19. In step S3, vacuum is applied via the vacuum application device 10 so as to remove air that is present inside the foam core 1 and in the space 2 or spaces 2 between the skin sheets 3 and 4, the foam core 1 as well as the sections of the mid frame 19, from within the foam core 1 and the space or spaces 2. The air is removed through the vacuum needle 11 using a device, not shown, creating the vacuum - e.g. a suitable pump device - by means of suitable tubing or piping, not shown in the figures. Due to the application of vacuum, the skin 6 composed of the upper skin sheet 3 and the lower skin sheet 4 is drawn towards the foam core 1, whereby the skin sheets 3 and 4 and thus the skin 6 are/is thermoformed by conforming the heated skin sheets 3 and 4 at least in regions thereof to the foam core 1, using the vacuum.

Figure 1 also shows that the supporting arrangement 33 including the mid frame 19 is constructed such that the skin sheets 3 and 4, in other words, portions of the skin 6, as well as portions of the supporting arrangement 33, in case of the embodiment of Figures 1-8A the mid frame sections 19a-d, in cooperation temporarily form an enclosure around the foam core 1. This enclosure is sealed with the exception of the vents 45, which are provided in the mid frame 19 and which enable outflow of air from the interior of the enclosure, namely, from the interior of the space defined by the mid frame sections 19a-d, the foam core 1, as well as the upper and lower skin sheets 3 and 4. The outflow of air through one of the vents 45 is denoted by reference signs 46 in Figures 5-8. The vents 45 remain open during the application of the vacuum. Outflow 46 of air through the vents 45 during the heating and the application of vacuum avoids pressure buildups in the enclosed space between the sheets 3, 4 and the core 1, and enables rapid thermoforming of the skin 6 onto the foam core 1.

During the thermoforming of the skin 6, the heated skin 6 comprising the skin sheets 3 and 4 is drawn onto the foam core 1 in such a manner as to contact the surface of the foam core 1, whereby the skin 6 is reliably connected to the foam core 1 by fusion. The residual heat contained in the heated skin sheets 3 and 4 is sufficient, in accordance with the embodiment of Figures 1-8A of the present invention, to melt the material of the foam core 1 on the surface thereof to a defined extent, whereby a fusion weld between the skin 6 and the foam core 1 is accomplished. In order to avoid that the connection by fusion welding along the surface of the foam core 1 becomes unreliable, the upper and lower skin sheets 3 and 4, respectively, should be drawn against the foam core 1 with sufficient speed, which can be accomplished by the vacuum applied via the vacuum application device 10 in combination with a suitably chosen foam core 1, as will be described below.

Moreover, in order to avoid that the foam core 1 melts beyond what is necessary to accomplish the connection by fusion (this may be referred to as "burn back"), the gauge or thickness t of each of the skin sheets 3 and 4 as well as the density of the foam core 1 are selected and matched in an appropriate manner.

A further step S4 of the method for manufacturing a laminated object is displayed in Figure 7. In the state displayed in this figure, the skin sheets 3 and 4 have been drawn towards the foam core 1 to such an extent that in a region 63 of the upper skin sheet 3 as well as in a region 64 of the lower skin sheet 4, located between the foam core 1 and the mid frame 19, the sheets 3 and 4 reach the bar elements 28. In step S4, as indicated in Figure 7 by arrow P31, the support pins 31 are retracted, or pulled back, into the bar elements 28.

Then, in the subsequent step S5, as the vacuum continues to be applied by the vacuum application devices 10 the upper and lower skin sheets 3 and 4 are completely drawn towards each other and into contact with each other, also at the former locations of the support pins 31. Hence, the skin sheets 3 and 4 are fusion-welded to each other in a region 66 extending around the entire perimeter of the foam core 1 and thus of the laminated object. By fusion welding the skin sheets 3 and 4, between which the foam core 1 is located, the foam core 1 is tightly enclosed and sealed within the skin 6.

When the vacuum within the foam core 1 has been completed and welding along the perimeter of the foam core 1, in the regions 66, has been accomplished, in step S6, cooling of the laminated object is started. This can, for example, be accomplished by appropriate cooling devices 26, in particular by fans which may be controlled in a suitable manner, for example based on their flow rate and/or rotational speed and/or based on the time these fans are switched on for cooling. An exemplary cooling device 26 is illustrated in Fig. 21 in schematic manner.

Some control of the cooling process of the skin sheets 3, 4 is possible by controlling the cooling devices 26. In this manner, a controlled shrinking of the sheet material from which the skin 6 is made can be brought about. The composite body forming the laminated object, comprising the foam body 1 and the skin sheets 3 and 4, thus forms a very resistant pre-stressed structure after cooling and shrinking of the skin sheets 3, 4.

The process of the embodiment of Figures 1-8, just de-scribed, is thus a twin sheet process for manufacturing a laminated body comprising a foam core 1, wherein two skin sheets 3, 4 are each thermoformed onto the foam core 1, without the use of any external female tools for deforming the sheets 3, 4. The forming is accomplished by the vacuum applied to the interior of the foam core 1, and by the foam core 1, which defines the shape to which the heated sheets 3 and 4 are deformed. Both sides of the foam core 1 are thus laminated essentially simultaneously, and in this process the foam core 1 is completely enclosed and fully sealed within the skin 6 by welding the sheets 3, 4.

After step S6, in step S7, the frames 15, 19 and 21 as well as the top vertically moving frame 24 supporting the vacuum application devices 10 return to their open initial positions, in such a manner that the laminated object, e. g. a pallet or pallet section, can be removed.

In a subsequent step S8, remaining unnecessary portions of the sheets 3 and 4 outside the region defined by the peripheral region 66 are trimmed. A portion of the laminated object in a state following trimming is shown in exemplary manner in Fig. 8A.

The foam core 1 used in the method just described with reference to Figures 1-8A and 19 is a foam core made from a synthetic material, in this embodiment from polystyrene foam, in particular from expanded polystyrene. The foam core 1 is, using an appropriate shaped-molding device, shaped-molded to a desired shape from pre-expanded EPS beads, preferably from beads of a very low pentane grade of expanded polystyrene that does not require ageing. The density of the foam core 1 may be varied according to e.g. the desired load-carrying capacity or strength. For use in a transport pallet for repeated use, the foam core 1, which may also be called EPS core, will preferably be molded to a comparatively high density.

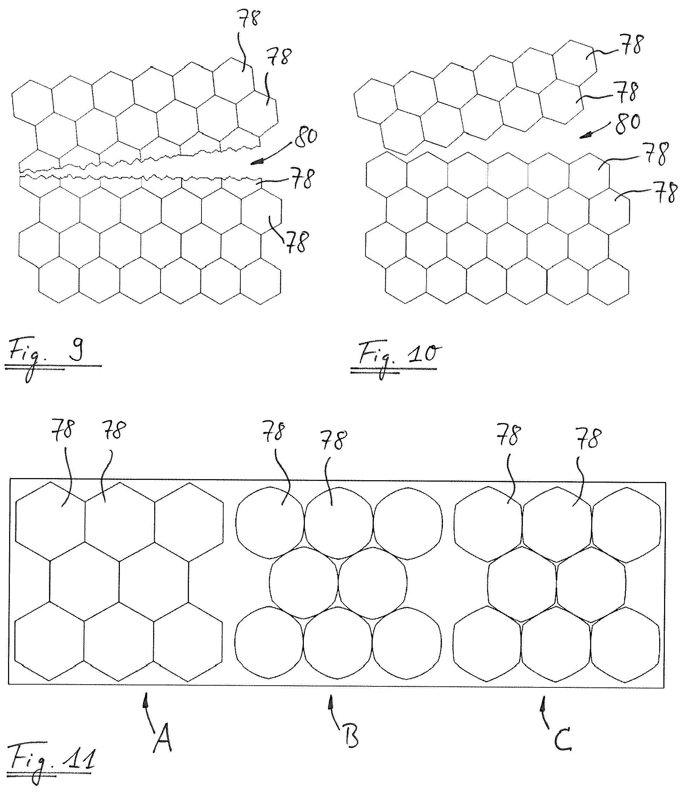

A shape molding machine converts pre-expanded beads into the desired core shape. In order to accomplish a rapid drawing of the skin sheets 3 and 4 onto the surface of the foam core 1, so as to accomplish a reliable connection of the skins 3 and 4 to the foam core 1 by melting of the foam core 1 at the surface thereof, sufficient residual heat within the sheets 3 and 4 should be present. Therefore, the fusion level of the beads obtained during shape-molding is selected to be smaller than 100 percent. The notion of fusion level is illustrated in Figures 9 and 10. In Figure 9, there is full fusion, and thus a fusion level of 100 percent, as all beads 78 of a piece of the foam that has been broken along a rupture line or break 80 have broken within themselves. Figure 10, in contrast, illustrates a case of zero percent fusion. In Figure 10, all beads remain intact along the break 80.

The notion of fusion level is again illustrated in Figure 11, where "A" illustrates 100 percent fusion, "B" designates a foam structure of approximately 60 percent fusion, and "C" indicates a structure exhibiting approximately 80 percent fusion of the beads 78.

For the embodiment of Figures 1-8A and 19, the fusion level of the beads obtained during shape molding is preferably selected between 70 % and 90 %, more preferably between 75 % and 85 %. In accordance with a particularly preferred variant, the fusion level of the foam used for the foam core 1 corresponds to 80 %. This ensures sufficient structural strength, while also ensuring sufficient airflow during application of the vacuum by the vacuum application device 10.

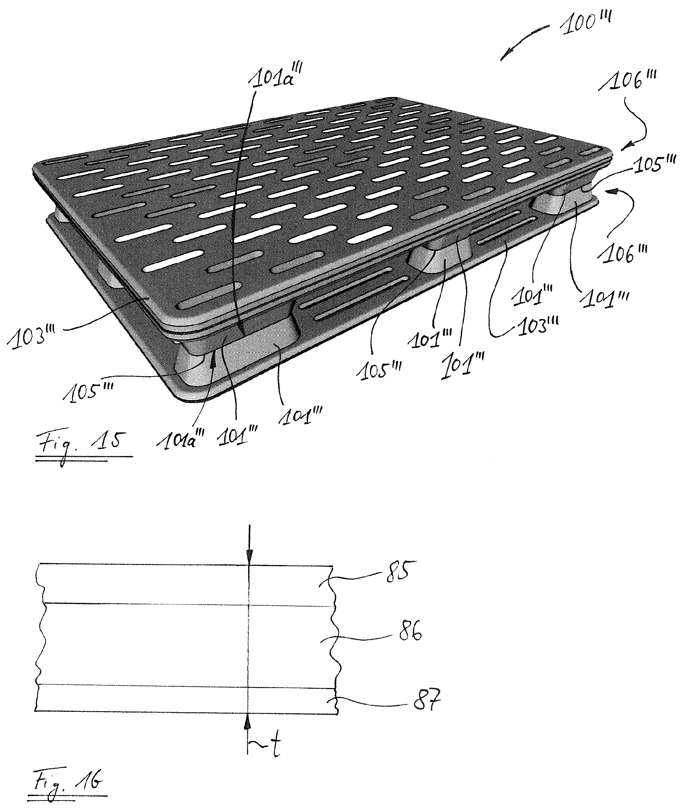

As indicated, the skin 6 is formed with a thermoformable synthetic sheet material, in particular a thermoplastic. The structure of the sheet material used for the skin sheets 3 and 4 in accordance with a particularly preferred variant of the embodiment of Figs. 1-8A is displayed schematically in Figure 16.

In accordance with the preferred embodiment, the thermoplastic sheet material used for the skin sheets 3 and 4, to be thermoformed and connected to the foam core 1 in the process of Figures 1-8, is formed as a sheet by multiple layer extrusion, and comprises a layered arrangement comprising at least a first layer 85 of virgin acrylonitrile styrene acrylate (virgin ASA), a second layer 86 made of virgin acrylonitrile butadiene styrene (virgin ABS), and a third layer 87 made of acrylonitrile styrene acrylate (ASA) and acrylonitrile butadiene styrene (ABS). The third layer may comprise approximately 10 percent by mass of acrylonitrile butadiene styrene, the rest being acrylonitrile styrene acrylate. However, multiple layer extrusions of various combinations of these thermoplastics may be useful for performing the method of the present invention. Other multiple layer extrusions involving other thermoformable, in particular thermoplastic synthetic materials may be contemplated for use in the methods and products of the present invention.

The first layer 85 forms an outside layer of virgin ASA and contributes to strength, impact resistance and UV stability. The first layer 85 may, in an example, have a thickness that corresponds to approximately 25 % of the sheet gauge or thickness t. The second layer 86 forms a middle or intermediate layer and is made of virgin ABS for increased strength and increased impact resistance. The third layer 87 forms an underside layer and is made of ASA with approximately 10 % ABS by mass added to it, which may be accomplished during the extrusion process by trimming a small amount of the edge and feeding it back into the third layer. In the laminated object, comprising skin sheets 3 and 4 having a layered arrangement as schematically depicted in Figure 16, the layer 87 will be oriented towards the foam body 1. The thickness t of the sheet material may be selected according to requirements. For example, for producing pool type pallets, a relatively large thickness t may be preferable.

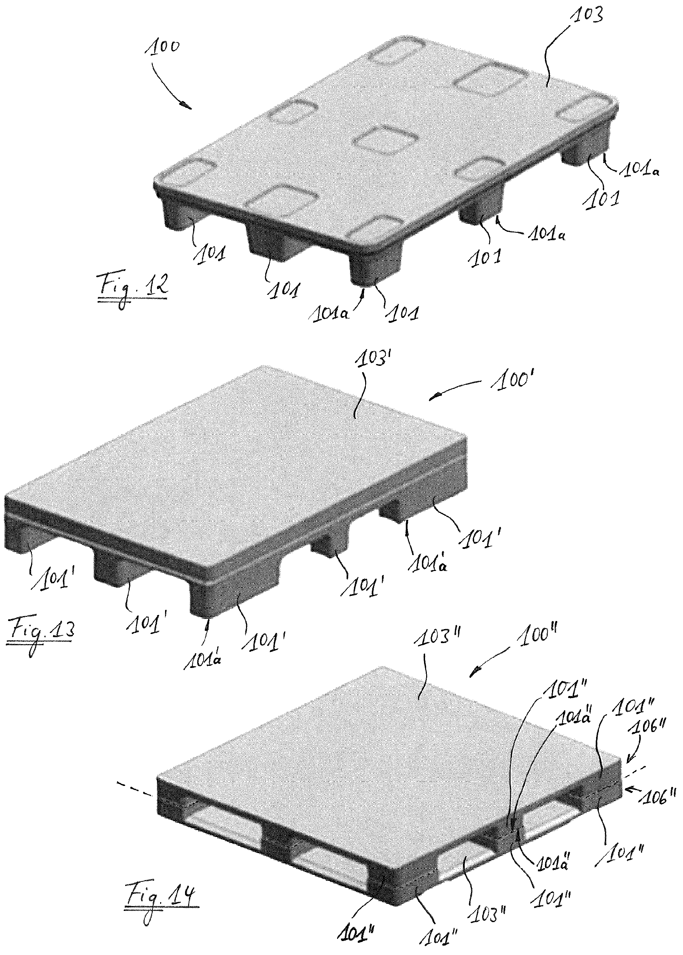

Reference will now be made to Figures 12 to 15 and 17 as well as 18. Using the method described with respect to Figures 1-8A and 19, pallets, especially transport pallets, for example of the pool type, may be produced. These could be used, for example, for replacing commonly known and widely used, heavy wooden pallets, such as the known Euro-pallet, the Düsseldorf type pallet, or other conventional pallet types.

In Figures 12-15, some examples of pallets that may be produced in accordance with embodiments of the present invention are displayed. Figure 12 shows a single-sided, 4-way pallet 100 comprising nine feet 101 as well as a plate-shaped section 103. In the example of Figure 12, the weight of the pallet 100 may be about 5,4 kg, the size of the pallet may be 1200 mm x 800 mm x 150 mm, the static load capacity may be approximately 3000 kg and the dynamic load capacity may be approximately 1000 kg.

The pallet 100' of Fig. 13 is a single-sided 4-way pallet of a size of 1140 mm x 760 mm x 165 mm and a weight of approx. 7,8 kg, having feet 101' and a plate-shaped section 103'. The pallet 100' may have a static load capacity of approx. 3000 kg and a dynamic load capacity of approx. 800 kg. Compared to the pallet 100 of Fig. 12, the pallet 100' of Fig. 13 is further suitable for racking.

Also, double-sided pallets may be produced in accordance with embodiments of the present invention, for example the double-sided pallet 100" of Figure 14, which is also a 4-way pallet. The size may be about 1165 mm x 1165 mm x 150 mm, the weight of the pallet 100" may be approximately 10 kg, the static load capacity of the pallet 100" of Figure 14 may be approximately 3000 kg, and the dynamic load capacity of the pallet 100" may be approximately 1000 kg. The pallet 100" would also be suitable for racking. The pallet 100" comprises two plate-shaped, substantially flat sections 103".

Another double-sided pallet in accordance with an embodiment of the invention is displayed in Figure 15, in which plate-shaped sections 103"' have been provided with a structured surface.

Each of the pallets 100" and 100"' comprises two substantially identical pallet sections 106" and 106"', respectively. Corresponding feet 101" and 101"', respectively, of each of the pallet sections 106", 106"' are firmly joined to each other to form the completed pallet. The joint is denoted by reference sign 105"', in Figure 15.

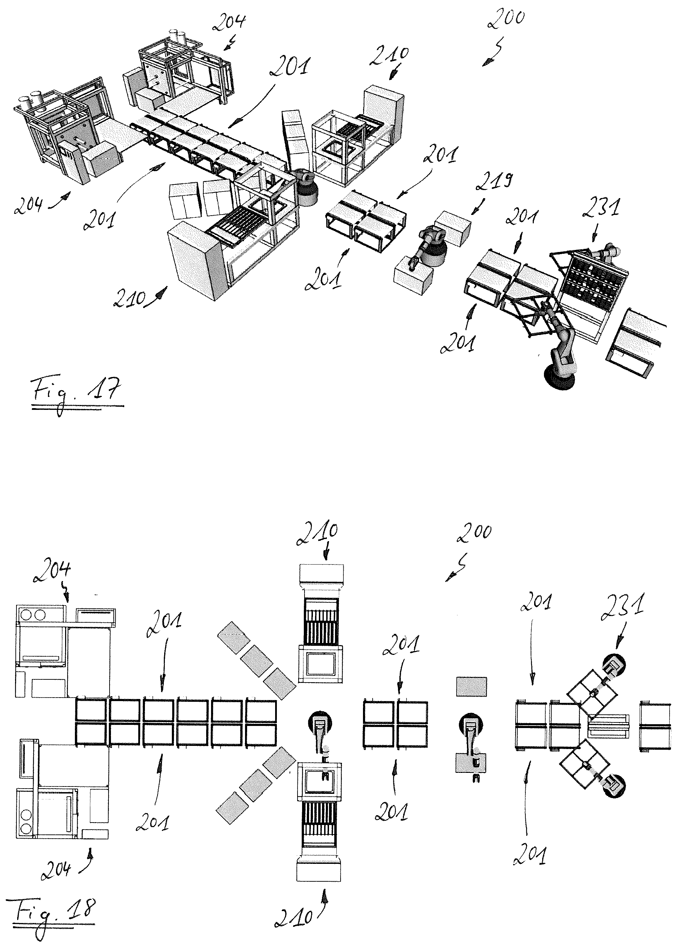

Figs. 17 and 18 show a production arrangement 200 in accordance with an embodiment of the invention, and will be used in the following to illustrate a method according to an embodiment of the invention for producing pallets comprising a foam core 1 formed from a synthetic foam material and a skin 6 formed from a synthetic sheet material.

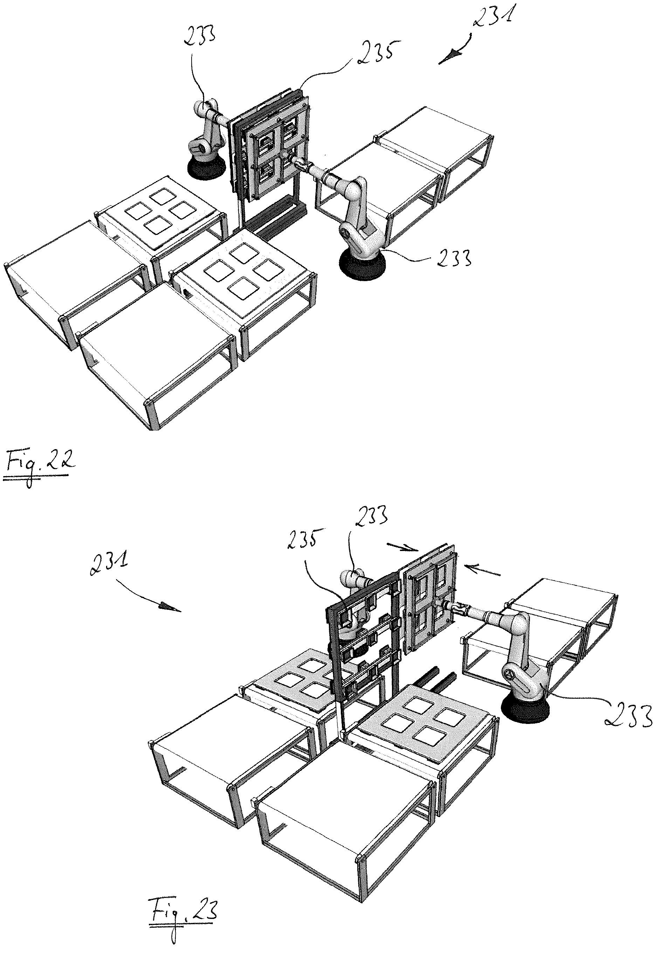

The production arrangement 200 comprises two shape-molding devices 204 and two laminating devices 210. Using the shape-molding devices 204, foam cores 1 are shape-molded in parallel one after another to the desired core density. The shape-molding is performed as described above starting from pre-expanded polystyrene beads, to a fusion level of preferably approximately 80 %, for example. The foam cores 1, not shown in Figures 17 and 18, are then transported to the laminating devices 210 using conveyors 201. Using the laminating devices 210, each of the foam cores 1 produced is laminated in accordance with the method described above with reference to Figures 1-8A and 19. Thereby, from each foam core 1, which is completely sealed within a skin 6 made from the sheets 3 and 4 as described above, a laminated pallet section, for example a pallet section 106" or 106"', is manufactured. As described above, in each of these pallet sections, the foam core 1 is covered by and firmly connected to the skin 6. The laminated pallet sections are then conveyed further to a trimming station 219 by further conveyors 201. At the trimming station 219, each of the pallet sections is trimmed, especially by cutting, along the edge, sheet material remaining from the laminating process which is not necessary anymore. Then, after trimming, further conveyors 210 convey the trimmed pallet sections to a welding station 231, where the bottom faces of corresponding feet 101" or 101'" of the pallet sections, for example the bottom faces 101 a" or 101 a"', as illustrated in Figures 14 and 15, are welded to each other. For this purpose, the two pallet sections, e.g. 106" or 106"', may each be held in appropriate manner in front of heaters 235 until a suitably chosen temperature setpoint is reached by the bottom faces 101 a", 101a'" of the feet 101" or 101"', respectively. After having been sufficiently heated, the two pallet sections, e.g. 106" or 106'", are pushed against each other so that the bottom faces 101 a" or 101 a"' weld, in the example of Figure 15 in the region of the joint 105"'. This can be accomplished using, for example, suitable robots 233, see Figures 22 and 23. Then, the pallet, e.g. 100" or 100"', is left to cool for a sufficient time so that material in the region of the weld can solidify to establish a firm connection.

Accordingly, double-sided pallets 100" or 100"' comprising two twin sheet laminated pallet sections 106" or 106"', are manufactured.

Regarding the materials used for the foam core 1 and for the skin 6, made from skin sheets 3 and 4, of the pallets 100, 100', 100", 100"' or of the pallet sections 106", 106'", reference is made to the explanations provided above with regard to Figures 1-8, 8A, 9-11, 16 and 19.

Using the production arrangement 200 displayed in Figures 17 and 18, single-sided twin sheet pallets, e.g. of the type illustrated in Figs. 12 and 13, may be produced as well. In this case, the step of welding pallet sections to each other is omitted. Further, in this case, each pallet, e.g. 100, 100', is a laminated body made in accordance with the method as described with reference to Figures 1-8A, 16 and 19, comprising one foam core 1 sealed within and connected to the skin 6.

As has been illustrated with reference to Figures 1-8, the upper skin sheet 3 is pierced by the vacuum application devices 10. This is done in such a manner, in accordance with the embodiment, that the piercing of the skin 6 and foam core 1 takes place only in the region of the bottom faces 101 a, 101 a', 101 a" or 101 a'" of the feet 101, 101', 101", 101"', the feet 101, 101', 101", 101"' being formed by the legs 91 of the foam core 1 over which the skin 6 has been thermoformed, as described above.

Therefore, the needles 11 leave only small apertures in the upper skin sheet 3 during the piercing step. When the two pallet sections, e.g. 106" or 106"', are welded to each other, the apertures 55, see Figures 7 and 8, are sealed. After sealing the apertures 55 in the bottom faces of the feet 101 ", 101'" in this manner, a light vacuum is permanently preserved within the foam core 1 of each of the pallet sections 106", 106"' of the finished pallet 100", 100"'. Such a vacuum has the benefit that it further improves the insulation properties of the pallet. Therefore, such a pallet is very well suitable for applications requiring cooling of the goods and the pallet, as such a pallet may, for example, only require approx. 30 % of the energy needed to cool a wooden pallet to a cool room temperature.

In the case of single-sides pallets 100, 100', such as displayed in Figures 12 and 13, the apertures 55 may, for example, remain unsealed.

During production of the foam cores 1, for example by the shape-molding devices 204, a radio frequency identification transponder 99 (RFID transponder) may be integrated into the foam core 1, in particular when the foam core 1 is molded. After laminating, trimming and, as the case may be, welding, the finished pallet 100, 100', 100" or 100"', for example, may thus comprise an integrated RFID transponder 99, by which the pallet can be easily tracked. This contributes to the versatility of the pallets in accordance with the embodiments of the present invention. An RFID transponder 99 integrated into the foam core 1 is schematically illustrated in Fig. 1.

Moreover, the skin 6 of the pallets 100, 100', 100" or 100'" can be customized in accordance with special design solutions, for example by choosing an appropriate color, logo, as well as labelling by printing or by relief. Therefore, the pallets in accordance with embodiments of the present invention can be equipped in a simple manner as a finished display for retail.

Reference is now made to Figure 20. This figure illustrates a method for producing pallets, which may be single- or double-sided, according to a further embodiment of the invention.

Initially, in step S0', the density of a foam core 1, the thickness and composition of the sheet material for providing skin sheets 3 and 4, constituting the skin 6 after thermoforming and welding, are selected or appropriately varied so as to reach target values selected.

Then, in step S1', a foam core 1 or foam cores 1 having the density chosen in step S0' are shaped-molded in accordance with the description given above with reference to Figs. 17 and 18. Thereafter, in step S2', the foam core 1 or the foam cores 1 each are laminated according to the settings chosen in step S0', with the appropriate, selected skin 6. If necessary, it is also conceivable to laminate each of two foam cores 1 provided for two pallet sections in a different manner, based on corresponding settings for each pallet section, selected in step S0'. The laminating step is accomplished in accordance with the description provided above in relation to Figs. 1-11 and 16-19.

Thereafter, in step S3', the obtained laminated object or the obtained laminated objects, being pallets, e.g. 100 or 100', or pallet sections, e.g. 106" or 106"', are suitably trimmed, as already mentioned above with respect to Figures 17 and 18. In case several pallet sections have been produced, especially in parallel or simultaneously, these pallet sections are welded to each other, as described above, in step S4'.

During the ongoing production of consecutive pallets or pallet sections, the density of the foam cores 1 to be produced, the thickness of the sheet material used to provide the skin sheets 3 and 4, and/or the composition of this sheet material are varied, for example by selecting for each pallet to be produced, or for a number of consecutive pallets, the foam core density, the skin composition and/or the skin thickness.

This results in a versatile production process. A range of pallets of different specification can be produced from a single core design and using one type of molding tool. This is achieved by varying the foam core density and/or the skin sheet composition and/or the skin sheet thickness as required for the desired weight and strength of the pallet to be produced. For example, core density and skin thickness could be varied while the skin composition is kept constant, i.e. maintained the same for all pallets. Varying these parameters is done on the fly, and thus without stopping the production line. Therefore, the properties of the pallets to be produced can be finely adjusted in a large number of steps, between e.g. a lightweight airfreight pallet, for example having a weight of about 3,1 kg when empty, up to a superproof pallet for heavy duty, having a greater empty weight of approximately 12 kg.

The pallets produced in accordance with the embodiments of the invention described above therefore are a durable and hence well re-usable, lightweight, environmentally friendly, hygienic, safe and cost-effective alternative to conventional wooden pallets.

The use of the expanded polystyrene foam core 1 and the thermoformable skin 6, in particular the highly performant skin 6 described in connection with Figure 16, result in a high-performance and extra-light plastic pallet. The handling and transportation of such pallets in accordance with the embodiments of the invention are much improved. Fuel for transportation can be saved, whereby transportation costs are reduced and the environmental impact is reduced as well, for example due to reduced carbon dioxide emissions as a consequence of the reduced pallet weight. Lighter pallets also mean a reduction in the materials used for producing them, and less energy required for the processing of such material. During transport, less weight results in a logistic cost reduction. Also, the lumber consumption is reduced.

The light weight plastic pallets in accordance with the embodiments of the present invention are further moisture-proof, shock absorbent, safe, washable and versatile. They are also hygienic, in particular because the pallets of the invention are inherently immune to infestation, do not require any costly heat treatment or chemical fumigation, and can be cleaned in a simple manner with standard systems suchs as a pressure washer or steam cleaner, and can also be sterilized in inexpensive manner. Common and inexpensive cleaning agents can be used. Rusting and rotting of pallet materials is avoided. The safety of the pallets is also increased based on their smooth outer surface, provided by the skin 6, so that there is no danger of injury from any splinters of wood or nails. Absorption of water by the pallets according to the embodiments of the present invention is avoided by the foam core 1 being fully sealed inside the skin 6.

The combination of the expanded polystyrene foam core 1 with the advantageous material used for the skin sheets 3 and 4, as described above with reference to Figure 16, results in a shock absorbent pallet. Therefore, goods transported using such a pallet arrive at their destination without being damaged, which makes the pallet particularly useful also for high-value products.

Further, the pallets' insulating properties, enhanced by the use of the EPS core 1 and the vacuum inside the foam core 1, are particularly advantageous for temperature-sensitive goods such as cold chain cargo or pharmaceuticals.

The pallets in accordance with the embodiments of the present invention are also suitable for a large temperature range, in particular for a range between about - 40 degrees Celsius and about + 80 degrees Celsius.

The pallets produced in accordance with the embodiments of the present invention, described above, can also be fully recycled in a very advantageous manner. In a first stage of a recycling process conceivable for the pallets in accordance with the embodiments of the invention, the pallet is shredded, whereby the pallet is broken into small pieces and the expanded polystyrene foam is removed from the skin. The EPS and the combination of ABS and ASA contained in the co-mingled material can then be separated from each other by a density separation process, resulting in a stream of EPS and a stream of ABS/ASA. The material streams can be re-used in a wide variety of applications. For example, the ABS/ASA granulate could be used in the injection molding industry and/or, after an extrusion process, for skins, e.g. for pallets, again. Moreover, the recovered expanded polystyrene can be used for molding beads, loose fill, recycled resins and many other applications.

Although the present invention has been completely described above with reference to preferred embodiments, the invention is not limited to these embodiments, but may be modified in many ways.

In particular, the shapes and sizes of pallets manufactured in accordance with the present invention may vary according to requirements. Even though it may be preferable to select the lengths, widths and heights of the pallets in accordance with sizes of conventional pallets that are currently in use, selecting other sizes may be contemplated. Further, even though generally rectangular pallets may be advantageous, other pallet shapes are conceivable. The number and shape of feet of the pallets or pallet sections might also be varied according to requirements, but the feet number and shapes are preferred to enable the pallets to be manipulated using standard equipment.

### List of reference signs

- 1: foam core
- 1a: first face (foam core)
- 1 b: second face (foam core)
- 2: space
- 3: upper skin sheet
- 3a: section (skin)
- 4: lower skin sheet
- 6: skin
- 10: vacuum application device
- 11: needle
- 12: front portion (needle)
- 15: bottom clamp frame
- 19: mid frame
- 19a-19d: section (mid frame)
- 21: top clamp frame
- 24: top vertically moving frame
- 26: cooling device
- 28: bar element
- 31: support pin
- 33: supporting arrangement
- 35: needle surrounding component
- 36: sealing face
- 41: top heating device
- 42: bottom heating device
- 43: heating arrangement
- 45: vent
- 46: outflow, in particular outflow of air
- 55: aperture
- 63: region
- 64: region
- 66: region
- 78: bead
- 80: break
- 85: first layer (thermoformable sheet material)
- 86: second layer (thermoformable sheet material)
- 87: third layer (thermoformable sheet material)
- 91: leg (foam core)
- 99: RFID transponder

- 100: pallet
- 100': pallet
- 100": pallet
- 100"': pallet
- 101: foot
- 101': foot
- 101": foot
- 101'": foot
- 101a: bottom face (foot)
- 101a': bottom face (foot)
- 101a": bottom face (foot)
- 101a'": bottom face (foot)
- 103: plate-shaped section
- 103': plate-shaped section
- 103": plate-shaped section
- 103"': plate-shaped section
- 105'": joint
- 106": pallet section
- 106'": pallet section

- 200: production arrangement
- 201: conveyor
- 204: shape-molding device
- 210: laminating device
- 219: trimming station
- 231: welding station
- H: horizontal direction
- V: vertical direction
- t: thickness (skin)

- P28: arrow
- P31: arrow
- P41: arrow
- P42: arrow

- S0: preparation step
- S1: heating step
- S2: piercing step
- S3: vacuum application and thermoforming step
- S4: support pin retraction step
- S5: skin sheet welding step
- S6: cooling step
- S7: removal step
- S8: trimming step

- S0': selection step
- S1': foam core molding step
- S2': laminating step
- S3': section welding step
- S4': step

## Claims

1. Method for manufacturing a laminated object (100; 100'; 106"; 106"'), comprising steps of:
- providing a foam core (1) and a skin (6) and arranging the foam core (1) and the skin (6) relative to each other;
- heating the skin (6);
- piercing the skin (6) by a vacuum application device (10); and
- applying vacuum via the vacuum application device (10) so as to remove a gaseous medium, in particular air, from within the foam core (1) and from a space or spaces (2) between the foam core (1) and the skin (6), in order to draw the skin (6) towards the foam core (1).

2. Method according to claim 1, **characterized in that**, before the vacuum is applied, a portion (12) of the vacuum application device (10) is caused to penetrate through the skin (6) into the foam core (1) in the piercing step.

3. Method according to claim 1 or 2, **characterized in that** the vacuum application device (10) comprises a hollow needle (11), in particular a hypodermic needle (11), by which the skin (6) is pierced in the piercing step.

4. Method according to at least one of the preceding claims, **characterized in that** in the step of piercing the skin (6), a section (3a) of the skin (6) is pressed against the foam core (1) by a sealing face (36) surrounding the vacuum application device (10).

5. Method according to at least one of the preceding claims, **characterized in that** an aperture (55) or apertures (55) created in the skin (6) during the piercing step is or are sealed after withdrawing the vacuum application device (10) or the vacuum application devices (10), the sealing step being performed in particular in such a manner that a vacuum is permanently preserved within the foam core (1) of the finished laminated object (100; 100'; 106"; 106'").

6. Method according to at least one of the preceding claims, **characterized in that** the method includes thermoforming the skin (6) by conforming the heated skin (6) at least in regions to the foam core (1), using the vacuum that is applied via the vacuum application device (10).

7. Method according to at least one of the preceding claims, **characterized in that** in the step of applying the vacuum, the heated skin (6) is drawn onto the foam core (1) so as to contact the surface of the foam core (1), and **in that** the skin (6) is connected to the foam core (1) by fusion, in particular by fusion of the foam core (1) in the region of the surface thereof.

8. Method according to at least one of the preceding claims, **characterized in that** the step of providing the skin (6) comprises providing at least two skin sheets (3, 4), that the arranging step comprises arranging the foam core (1) between the skin sheets (3, 4), and that the step of piercing the skin (6) comprises piercing at least one (3) of the skin sheets (3, 4) by the vacuum application device (10).

9. Method according to at least one of the preceding claims, **characterized in that** the foam core (1) is formed with a synthetic material, in particular with a polystyrene foam, the foam core (1) preferably being formed with expanded polystyrene, and/or **in that** the skin (6) is formed with a thermoformable synthetic material, in particular a thermoplastic synthetic material.

10. Method according to at least one of the preceding claims, **characterized in that** the foam core (1) is shape-molded from pre-expanded beads (78), wherein the fusion level of the beads (78) obtained during shape-molding is smaller than 100 percent, preferably is between 70 percent and 90 percent, more preferably is between 75 percent and 85 percent, even more preferably corresponds to substantially 80 percent.

11. Method according to at least one of the preceding claims, **characterized in that** the method is a method for manufacturing a pallet (100; 100') or a pallet section (106"; 106"'), in particular a twin sheet pallet (100; 100') or a twin sheet pallet section (106"; 106"').

12. Manufacturing device (210) for manufacturing a laminated object (100; 100'; 106"; 106'"), in particular by performing the method according to at least one of the preceding claims, the manufacturing device comprising:
a supporting arrangement (33) adapted to support a foam core (1) and hold the foam core (1) and portions of a skin (6) in a predefined position relative to each other;
a heating arrangement (43) for heating the skin (6); and
a vacuum application device (10) adapted to pierce the skin (6) and adapted for removing a gaseous medium, in particular air, from within the foam core (1) and from a space or spaces (2) between the foam core (1) and the skin (6) via the vacuum application device (10).

13. Manufacturing device according to claim 12, **characterized in that** the supporting arrangement (33) is constructed such that the portions of the skin (6) and portions of the supporting arrangement (33) in cooperation can temporarily form an enclosure around the foam core (1) that is sealed with the exception of at least one vent (45) provided in the supporting arrangement (33), the at least one vent (45) being configured to allow outflow (46) of a gaseous medium, in particular air, from the interior of the enclosure.

14. Laminated object (100; 100'; 106"; 106'"), in particular a pallet or pallet section, comprising a foam core (1) and a skin (6), wherein the foam core (1) is formed from a synthetic material and the skin (6) is formed from a synthetic material, wherein the skin (6) is thermoformed around the foam core (1) so as to seal the foam core (1) within the skin (6) such that an at least partial vacuum is preserved within the space occupied by the foam core (1) and enclosed by the skin (6).

15. Laminated object (100; 100'; 106"; 106'"), in particular a pallet or pallet section, comprising a foam core (1) and a skin (6), wherein the laminated object (100; 100'; 106"; 106"') is manufactured by a method as claimed in at least one of claims 1 to 11.

16. Method for producing pallets (100; 100'; 100"; 100"') comprising at least one foam core (1) formed from a synthetic foam material and a skin (6) formed from a synthetic sheet material, using a production arrangement (200) comprising at least one shape-molding device (204) and at least one laminating device (210), the method comprising:
- shape-molding foam cores (1) one after another using the shape-molding device (204), and subsequently laminating the sheet material to each foam core (1) so as to provide a laminated pallet (100; 100') or laminated pallet section (106"; 106"') in which the foam core (1) is covered by and connected to the skin (6); and
- during ongoing production of consecutive pallets (100; 100'; 100"; 100"') or pallet sections (106"; 106'"), varying the density of the foam core (1) and/or varying the thickness (t) of the sheet material used to provide the skin (6) and/or varying the composition of the sheet material, and thereby producing pallets (100; 100'; 100"; 100"') or pallet sections (106"; 106"') differing in core density and/or in skin thickness and/or in skin composition.

17. Method for producing pallets according to claim 16, **characterized in that** the laminating step is carried out by performing the method according to at least one of claims 1 to 11, wherein the laminated object (100; 100'; 106"; 106'") is the laminated pallet (100; 100') or laminated pallet section (106"; 106"').

18. Pallet (100; 100'; 100"; 100"') comprising
a foam core (1) formed from a synthetic foam material, and
a skin (6) formed from a synthetic sheet material,
wherein the skin (6) is connected to the foam core (1) at the surface thereof by fusion.

19. Pallet according to claim 18, **characterized in that** the foam core (1) is formed with a polystyrene foam, in particular with expanded polystyrene.

20. Pallet (100; 100'; 100"; 100"') comprising
a foam core (1) formed from polystyrene foam, in particular from expanded polystyrene, and
a thermoformed skin (6) formed from a synthetic material and connected to the foam core (1).

21. Pallet according to at least one of claims 18 to 20, **characterized in that** the skin (6) comprises at least one layer (86, 87) which comprises acrylonitrile butadiene styrene and/or **in that** the skin comprises at least one layer (85, 87) which comprises acrylonitrile styrene acrylate.

22. Pallet (100; 100'; 100"; 100'") comprising at least one foam core (1) and a skin (6) formed from a thermoformable sheet material, the pallet in particular being manufactured using a method according to at least one of claims 1 to 11, wherein the thermoformable sheet material comprises at least one layer (86, 87) comprising acrylonitrile butadiene styrene.

23. Pallet according to claim 22, **characterized in that** the thermoformable sheet material comprises at least one layer (85, 87) comprising acrylonitrile styrene acrylate.

24. Pallet according to claim 23, **characterized in that** the thermoformable sheet material comprises a layered arrangement including a first layer (85) corresponding to the layer comprising acrylonitrile styrene acrylate, a second layer (86) corresponding to the layer comprising acrylonitrile butadiene styrene, and a third layer (87) comprising acrylonitrile styrene acrylate and acrylonitrile butadiene styrene, and preferably **in that** the second layer (86) is arranged between the first layer (85) and the third layer (87) and the third layer (87) faces the foam core (1).
